# EUROPEAN PATENT APPLICATION

(11) **EP 4 494 747 A1**
(43) Date of publication of application: **22.01.2025**
(21) Application number: 23795820.2
(22) Date of filing: 17.01.2023
(51) Int. Cl.: B01D 53/90, B01D 53/86, F01N 3/08, F23J 15/00

(54) **EXHAUST GAS TREATMENT DEVICE, COMBUSTION FACILITY, POWER-GENERATING FACILITY, AND EXHAUST GAS TREATMENT METHOD**

(30) Priority: 25.04.2022 JP 2022071415
(71) Applicant: Mitsubishi Heavy Industries, Ltd., Tokyo 100-8332 (JP)
(72) Inventor: NOCHI, Katsumi, Tokyo 100-8332 (JP); KAKO, Hiroshi, Tokyo 100-8332 (JP); MASUDA, Tomotsugu, Tokyo 100-8332 (JP); KAI, Keiichiro, Tokyo 100-8332 (JP); YOSHIMURA, Hiroyuki, Tokyo 100-8332 (JP)
(74) Representative: Studio Torta S.p.A.
(86) International application number: PCT/JP2023/001089
(87) International publication number: WO 2023/210071

(57) **Abstract**

An exhaust gas treatment apparatus includes: a first reduction catalyst, disposed in a flow path of combustion exhaust gas of a fuel, for promoting reduction reaction of a specific substance contained in the combustion exhaust gas; a reductant supply part, disposed upstream of the first reduction catalyst, for supplying a reductant for reducing the specific substance in the combustion exhaust gas; a reductant decreasing catalyst, disposed downstream of the first reduction catalyst in the flow path, for decreasing the reductant in the combustion exhaust gas; at least one second reduction catalyst, disposed downstream of the reductant decreasing catalyst in the flow path, for promoting reduction reaction of the specific substance; a first concentration measuring part for measuring a first concentration which is a concentration of the specific substance in the combustion exhaust gas in the flow path at a position downstream of the first reduction catalyst and upstream of the reductant decreasing catalyst; a second concentration measuring part for measuring a second concentration which is a concentration of the specific substance in the combustion exhaust gas in the flow path at a position downstream of the reductant decreasing catalyst; and a decision part configured to decide whether to increase or decrease a supply amount of the reductant from the reductant supply part, on the basis of the first concentration and the second concentration of the specific substance.

## Description

### TECHNICAL FIELD

The present disclosure relates to an exhaust gas treatment apparatus, a combustion facility, a power generation facility, and an exhaust gas treatment method.

The present application claims priority based on Japanese Patent Application No. 2022-071415 filed on April 25, 2022, the entire content of which is incorporated herein by reference.

### BACKGROUND ART

Specific substances (e.g., nitrogen oxides (NOx)) contained in combustion exhaust gas from combustion facilities such as power generation boilers, gas turbines, and combustion furnaces may be removed or reduced by decomposing them into harmless substances (in the case of nitrogen oxides, nitrogen and water) using reductants in the presence of catalysts.

Patent Documents 1 and 2 describe providing a catalyst (reduction catalyst) that promotes the reduction reaction of nitrogen oxides in the exhaust gas flow path and adding a reductant (ammonia or urea) to the exhaust gas upstream of the reduction catalyst to reduce and decompose nitrogen oxides in the exhaust gas by reaction with the reductant on the catalyst. In the apparatuses of Patent Documents 1 and 2, the supply amount of the reductant is adjusted based on detection results of the concentration of nitrogen oxides downstream of the reduction catalyst.

### Citation List

### Patent Literature

Patent Document 1: JP4986839B
Patent Document 2: JP6926581B

### SUMMARY

### Problems to be Solved

In an exhaust gas treatment apparatus such as a denitration apparatus, by supplying an excess amount of reductant to specific substances (such as NOx) to be reduced, it is possible to efficiently reduce the specific substances from exhaust gas. Here, if a catalyst (e.g., a catalyst that promotes the decomposition reaction of the reductant) is provided to reduce the amount of unreacted reductant (excess reductant), the above-mentioned specific substances may be generated as by-products on the catalyst, and too much reductant supply may increase the amount of specific substances emitted. Therefore, even if the concentration of specific substances at the outlet of the exhaust gas treatment apparatus is measured, it is unclear from the concentration whether the supply amount of the reductant is insufficient or excessive, and the supply amount of the reductant cannot be appropriately decided.

In view of the above circumstances, an object of at least one embodiment of the present invention is to provide an exhaust gas treatment apparatus, a combustion facility, a power generation facility, and an exhaust gas treatment method that enable appropriate adjustment of the reductant supply amount with a simple configuration even if a reductant is excessively supplied to a specific substance.

### Solution to the Problems

An exhaust gas treatment apparatus according to at least one embodiment of the present invention includes: a first reduction catalyst, disposed in a flow path of combustion exhaust gas of a fuel, for promoting reduction reaction of a specific substance contained in the combustion exhaust gas; a reductant supply part for supplying a reductant for reducing the specific substance in the combustion exhaust gas, the reductant supply part being disposed upstream of the first reduction catalyst; a reductant decreasing catalyst for decreasing the reductant in the combustion exhaust gas, the reductant decreasing catalyst being disposed downstream of the first reduction catalyst in the flow path; at least one second reduction catalyst for promoting reduction reaction of the specific substance, the at least one second reduction catalyst being disposed downstream of the reductant decreasing catalyst in the flow path; a first concentration measuring part for measuring a first concentration which is a concentration of the specific substance in the combustion exhaust gas in the flow path at a position downstream of the first reduction catalyst and upstream of the reductant decreasing catalyst; a second concentration measuring part for measuring a second concentration which is a concentration of the specific substance in the combustion exhaust gas in the flow path at a position downstream of the reductant decreasing catalyst; and a decision part configured to decide whether to increase or decrease a supply amount of the reductant from the reductant supply part, on the basis of the first concentration and the second concentration of the specific substance.

Further, a combustion facility according to at least one embodiment of the present invention includes: a combustion apparatus configured to burn a fuel; and the above-described exhaust gas treatment apparatus configured to treat combustion exhaust gas of the fuel from the combustion apparatus.

Further, a power generation facility according to at least one embodiment of the present invention includes: the above-described combustion facility; a turbine configured to be driven by the combustion exhaust gas from the combustion apparatus or steam produced by using heat of the combustion exhaust gas from the combustion apparatus; and a generator configured to be driven by the turbine.

An exhaust gas treatment method according to at least one embodiment of the present invention is an exhaust gas treatment method using an exhaust gas treatment apparatus that includes: a first reduction catalyst, disposed in a flow path of combustion exhaust gas of a fuel, for promoting reduction reaction of a specific substance contained in the combustion exhaust gas; a reductant supply part for supplying a reductant for reducing the specific substance in the combustion exhaust gas, the reductant supply part being disposed upstream of the first reduction catalyst; a reductant decreasing catalyst for decreasing the reductant in the combustion exhaust gas, the reductant decreasing catalyst being disposed downstream of the first reduction catalyst in the flow path; and at least one second reduction catalyst for promoting reduction reaction of the specific substance, the at least one second reduction catalyst being disposed downstream of the reductant decreasing catalyst in the flow path. The exhaust gas treatment method includes: a step of measuring a first concentration which is a concentration of the specific substance in the combustion exhaust gas in the flow path at a position downstream of the first reduction catalyst and upstream of the reductant decreasing catalyst; a step of measuring a second concentration which is a concentration of the specific substance in the combustion exhaust gas in the flow path at a position downstream of the reductant decreasing catalyst; and a step of deciding whether to increase or decrease a supply amount of the reductant from the reductant supply part, on the basis of the first concentration and the second concentration of the specific substance.

### Advantageous Effects

At least one embodiment of the present invention provides an exhaust gas treatment apparatus, a combustion facility, a power generation facility, and an exhaust gas treatment method that enable appropriate adjustment of the reductant supply amount with a simple configuration even if a reductant is excessively supplied to a specific substance.

### BRIEF DESCRIPTION OF DRAWINGS

FIG. 1 is a schematic diagram of a combustion facility and a power generation facility according to an embodiment.
FIG. 2 is a schematic diagram of an exhaust gas treatment apparatus according to an embodiment.
FIG. 3 is a schematic diagram of an exhaust gas treatment apparatus according to an embodiment.
FIG. 4 is a schematic diagram of an exhaust gas treatment apparatus according to an embodiment.
FIG. 5 is a schematic configuration diagram of a control device constituting the exhaust gas treatment apparatus according to an embodiment.
FIG. 6 is a flowchart of an exhaust gas treatment method according to an embodiment.
FIG. 7 is a graph for describing the process of the exhaust gas treatment method according to an embodiment.
FIG. 8 is a graph for describing the process of the exhaust gas treatment method according to an embodiment.
FIG. 9 is a flowchart of an exhaust gas treatment method according to an embodiment.
FIG. 10 is a graph for describing the process of the exhaust gas treatment method according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of combustion facility/power generation facility)

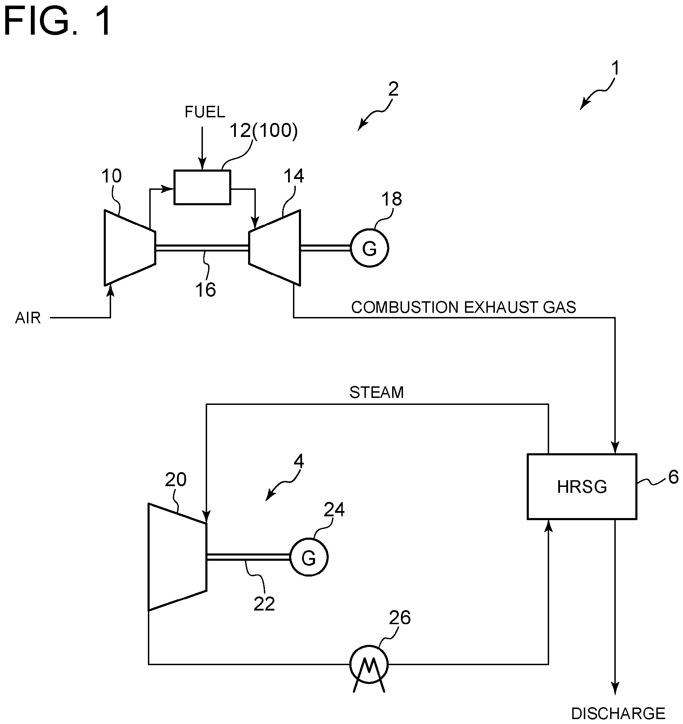

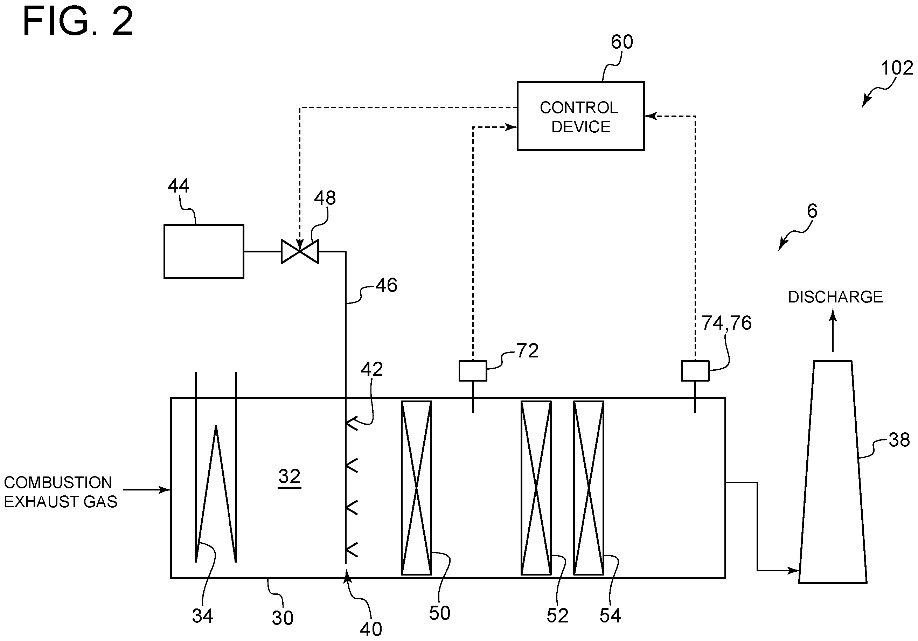

FIG. 1 is a schematic diagram of an example of a combustion facility and a power generation facility to which an exhaust gas treatment apparatus according to some embodiments is applicable. FIGs. 2 to 4 are each a schematic diagram of the exhaust gas treatment apparatus according to an embodiment. In some embodiments, a combustion facility 1 includes a combustion apparatus 100 (see FIG. 1) configured to burn fuel, and an exhaust gas treatment apparatus 102 (see FIGs. 2 to 4) configured to treat combustion exhaust gas from the combustion apparatus 100.

The combustion facility 1 shown in FIG. 1 is a gas turbine combined cycle (GTCC) power generation facility with a gas turbine facility 2 including a combustor 12 as the combustion apparatus 100, a steam turbine facility 4, and a heat recovery steam generator (HRSG) 6.

The gas turbine facility 2 includes a compressor 10, the above-described combustor 12, and a turbine 14. The compressor 10 is configured to compress air to produce compressed air. The combustor 12 is configured to generate combustion gas by combustion reaction between the compressed air from the compressor 10 and fuel. The turbine 14 is configured to be rotary driven by the combustion gas from the combustor 12. To the turbine 14, a generator 18 is connected via a rotational shaft 16, so that the generator 18 is driven by rotational energy of the turbine 14 to generate electric power. The combustion gas having finished work in the turbine 14 is discharged from the turbine 14 as the combustion exhaust gas. The fuel supplied to the combustor 12 (combustion apparatus 100) may include carbon-containing fuels such as natural gas or coal gasification gas and/or nitrogen-containing fuels such as ammonia.

The heat recovery steam generator 6 is configured to generate steam by heat of the combustion exhaust gas from the gas turbine facility 2. As shown in FIG. 2, the heat recovery steam generator 6 has a duct 30 (sees FIG. 2 to 4) to which the combustion exhaust gas from the gas turbine facility 2 is introduced and a heat transfer tube 34 disposed in a flow path 32 of the combustion exhaust gas defined by the duct 30. Into the heat transfer tube 34, condensate from a condenser 26 of the steam turbine facility 4 is introduced. In the heat transfer tube 34, steam is generated by heat exchange between the condensate and the combustion exhaust gas flowing in the duct 30. The exhaust gas having passed through the duct 30 of the heat recovery steam generator 6 is discharged through a stack 38.

The steam turbine facility 4 includes a turbine 20 configured to be driven by the steam from the heat recovery steam generator 6. To the turbine 20, a generator 24 is connected via a rotational shaft 22, so that the generator 24 is driven by rotational energy of the turbine 20 to generate electric power. The steam having finished work in the turbine 20 is led to the condenser 26, condensed into condensate water in the condenser 26, and supplied to the heat recovery steam generator 6.

The above-described combustion facility 1 or gas turbine facility 2 is a power generation facility that includes a turbine 14 configured to be driven by combustion exhaust gas driven by combustion exhaust gas from a combustor 12 (combustion apparatus 100) and a generator 18 configured to be driven by the turbine 14. Further, the above-described combustion facility 1 or steam turbine facility 4 is a power generation facility that includes a turbine 20 configured to be driven by steam produced by using heat of combustion exhaust gas from a combustor 12 (combustion apparatus 100) and a generator 24 configured to be driven by the turbine 20.

### (Configuration of exhaust gas treatment apparatus)

As shown in FIGs. 2 to 4, the exhaust gas treatment apparatus 102 includes a reductant supply part 40, a first reduction catalyst 50, at least one reductant decreasing catalyst 52 (52A to 52C), and at least one second reduction catalyst 54 (54A to 54C).

The reductant supply part 40 is configured to supply a reductant for reducing a specific substance contained in combustion exhaust gas from the combustion apparatus 100 to the combustion exhaust gas that flows through the flow path 32. By supplying the reductant to the combustion exhaust gas containing the specific substance, the specific substance in the combustion exhaust gas can be reduced, thereby decreasing the specific substance in the combustion exhaust gas. For example, if the specific substance is NOx, the reaction between NOx and the second reductant decomposes NOx in the combustion exhaust gas into nitrogen and water, decreasing NOx in the combustion exhaust gas. The reductant supply part 40 is disposed upstream of the first reduction catalyst 50 in the flow of the combustion exhaust gas.

In some embodiments, for example as shown in FIGs. 2 to 4, the reductant supply part 40 may be disposed upstream of the first reduction catalyst 50 in the flow path 32 of the combustion exhaust gas of fuel. As shown in FIGs. 2 to 4, the reductant supply part 40 may include a nozzle 42 configured to inject a liquid or gas containing the reductant into the flow path 32. The nozzle 42 may be supplied with a liquid or gas containing the reductant stored in a reductant storage part 44 via a supply line 46. The supply line 46 may be provided with a valve 48 for adjusting the amount of the second reductant supplied through the reductant supply part 40.

In some embodiments, the reductant supply part 40 may be configured to supply a fuel containing the reductant (e.g., ammonia) to the combustion apparatus 100 (e.g., the combustor 12 of the gas turbine facility 2). That is, the reductant supply part 40 may function as a fuel supply part for supplying fuel to the combustion apparatus 100. In this case, the unburned content of the reductant (fuel) that has not been burned in the combustion apparatus 100 is supplied to the combustion exhaust gas that flows through the flow path 32 as the reductant for reducing the specific substance contained in combustion exhaust gas from the combustion apparatus 100.

The specific substance may be nitrogen oxides (NOx) such as NO or NO₂. If the specific substance is NOx, the reductant is a substance that acts to reduce NOx and may include, for example, ammonia or urea. The reductant may be supplied to the combustion exhaust gas in the form of an aqueous solution (e.g., ammonia water or urea water).

The first reduction catalyst 50 is disposed downstream of the reductant supply part 40 in the flow path 32. The first reduction catalyst 50 is configured to promote the reduction reaction between the specific substance (e.g., NOx) in the combustion exhaust gas and the reductant (including the reductant supplied from the reductant supply part 40). If the specific substance is NOx and the reductant includes ammonia or urea, the first reduction catalyst 50 may include a metal or metal compound containing, for example, titanium, vanadium, tungsten, or molybdenum.

The at least one reductant decreasing catalyst 52 (52A to 52C) is disposed downstream of the first reduction catalyst 50 in the flow path 32. The reductant decreasing catalyst 52 is configured to decrease the reductant (unreacted reductant that has not been consumed in the reduction reaction of the specific substance) in the combustion exhaust gas. The reductant decreasing catalyst 52 may function to promote the decomposition reaction of the reductant in the combustion exhaust gas. If the reductant includes ammonia or urea, the reductant decreasing catalyst 52 may include a metal or metal compound containing, for example, platinum, copper, iron, cobalt, palladium, iridium, nickel or ruthenium.

The at least one second reduction catalyst 54 (54A to 54C) is disposed downstream of the reductant decreasing catalyst 52 in the flow path 32. The second reduction catalyst 54 (54A to 54C) functions to promote the reduction reaction between the specific substance in the combustion exhaust gas and the reductant. The specific substance in the combustion exhaust gas reaching the second reduction catalyst 54 may include specific substances produced by fuel combustion or other reactions in the combustion apparatus 100 and/or specific substances produced as byproducts of the decomposition reaction of the reductant on the reductant decreasing catalyst 52 of the exhaust gas treatment apparatus 102. If the specific substance is NOx and the reductant includes ammonia or urea, the second reduction catalyst 54 (54A to 54C) may include a metal or metal compound containing, for example, titanium, vanadium, tungsten, or molybdenum.

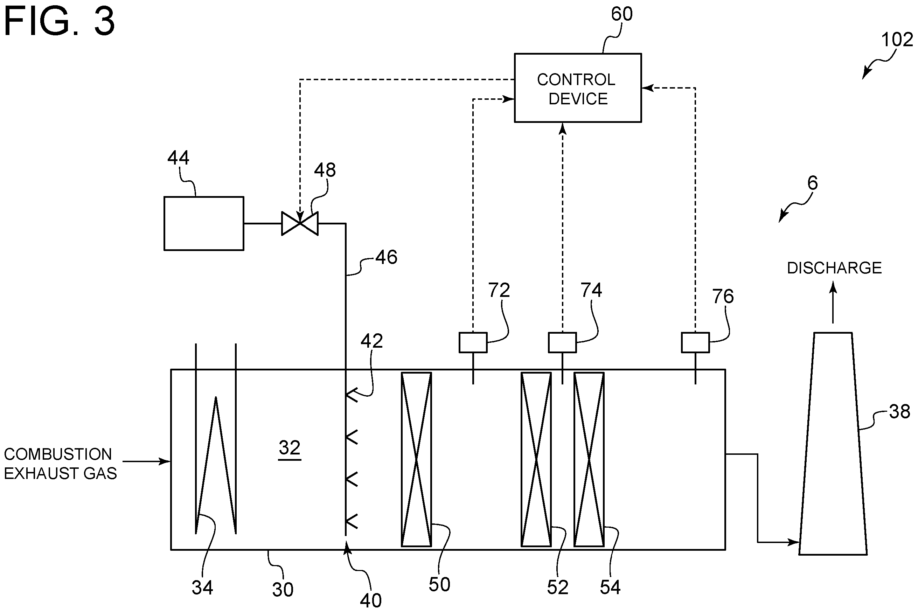

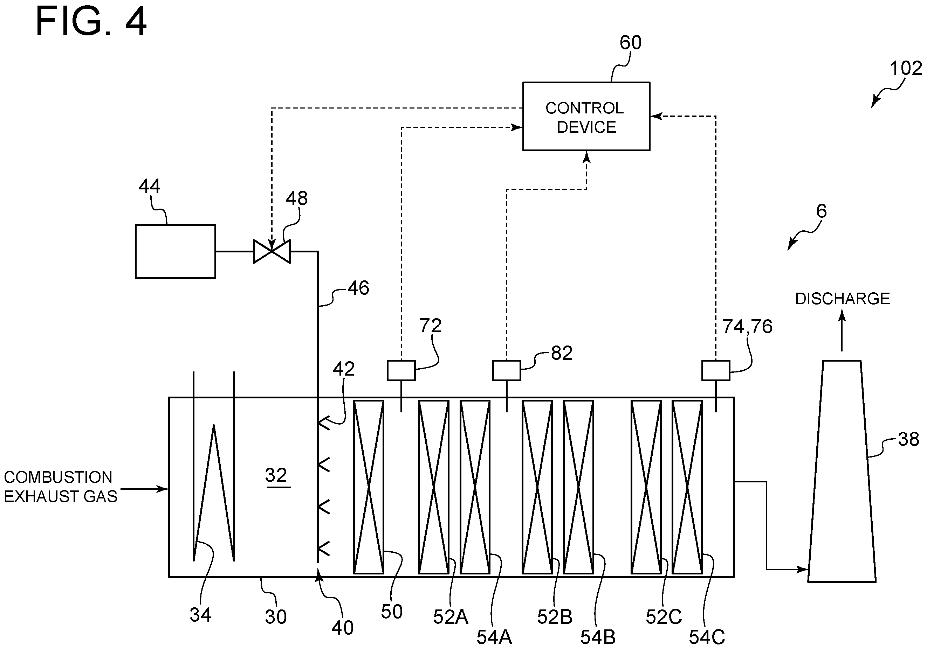

In the exemplary embodiment shown in FIGs. 2 and 3, one reductant decreasing catalyst 52 and one second reduction catalyst 54 are disposed downstream of the first reduction catalyst 50 in the flow path 32. In the exemplary embodiment shown in FIG. 4, a plurality of (three in the illustrated example) reductant decreasing catalysts 52 (52A to 52C) and a plurality of (three in the illustrated example) second reduction catalysts 54 (54A to 54C) are disposed downstream of the first reduction catalyst 50.

As shown in FIG. 4, a plurality of units each including the reductant decreasing catalyst 52 and the second reduction catalyst 54 installed immediately after the reductant decreasing catalyst 52 may be provided downstream of the first reduction catalyst 50 in the flow path 32.

As shown in FIGs. 2 to 4, the exhaust gas treatment apparatus 102 is equipped with a first concentration measuring part 72 and a second concentration measuring part 74 each of which is configured to measure the concentration of the specific substance (e.g., NOx) in the flow path 32 of the combustion exhaust gas.

The first concentration measuring part 72 is configured to measure the first concentration, which is the concentration of the specific substance in the combustion exhaust gas in the flow path 32 at a position downstream of the first reduction catalyst 50 and upstream of the reductant decreasing catalyst 52.

The second concentration measuring part 74 is configured to measure the second concentration, which is the concentration of the specific substance in the combustion exhaust gas in the flow path 32 at a position downstream of the reductant decreasing catalyst 52.

As shown in FIGs. 2 to 4, the exhaust gas treatment apparatus 102 may be further equipped with a third concentration measuring part 76 configured to measure the third concentration, which is the concentration of the specific substance in the flow path 32 of the combustion exhaust gas at a position downstream of the second reduction catalyst 54. When the flow path 32 of the combustion exhaust gas has a plurality of second reduction catalysts 54, the third concentration measuring part 76 is configured to measure, as the third concentration, the concentration of the specific substance at a position downstream of the most downstream second reduction catalyst 54 of the plurality of second reduction catalysts 54 (see FIG. 4).

If the specific substance is NOx, the NOx concentration in the combustion exhaust gas can be measured according to JIS K 0104 by using a chemiluminescent NOx meter (JIS B 7982), or by non-dispersive infrared method (NDIR method), or by zinc reduction naphthylethylenediamine absorptiometry (Zn-NEDA method). The first concentration measuring part 72, the second concentration measuring part 74, and/or the third concentration measuring part 76 may be configured to measure the NOx concentration using any of these methods.

In the exemplary embodiments shown in FIGs. 2 and 4, the second concentration measuring part 74 is configured to measure the concentration (second concentration) of the specific substance in the flow path 32 at a position downstream of the second reduction catalyst 54 (in FIG. 4, downstream of the most downstream one of the plurality of second reduction catalysts 54). That is, in this case, the second concentration is equal to the third concentration.

In the exemplary embodiment shown in FIG. 3, the second concentration measuring part 74 is configured to measure the concentration (second concentration) of the specific substance in the flow path 32 at a position downstream of the reductant decreasing catalyst 52 and upstream of the second reduction catalyst 54.

In the exemplary embodiment shown in FIG. 4, the exhaust gas treatment apparatus 102 is further equipped with a fourth concentration measuring part 82 configured to measure the fourth concentration which is the concentration of the specific substance at a position downstream of the most upstream second reduction catalyst 54 (in FIG. 4, second reduction catalyst 54A) and upstream of the most downstream second reduction catalyst 54 (in FIG. 4, second reduction catalyst 54C) of the plurality of second reduction catalysts 54. In FIG. 4, the fourth concentration measuring part 82 is disposed downstream of the second reduction catalyst 54A and upstream of the reductant decreasing catalyst 52B, but it can be provided at any position between the second reduction catalyst 54A and the second reduction catalyst 54C, for example, downstream of the second reduction catalyst 54B and upstream of the reductant decreasing catalyst 52C.

Further, as shown in FIGs. 2 to 4, the exhaust gas treatment apparatus 102 is equipped with a control device 60 for controlling the supply of the reductant from the reductant supply part 40 on the basis of the first concentration, the second concentration, and/or the third concentration of the specific substance (e.g., NOx).

The control device 60 includes a calculator equipped with a processor (e.g., CPU or GPU), a storage device (memory device; e.g., RAM), an auxiliary storage part, and an interface. The control device 60 receives signals indicating measured values of the first to third concentrations from the first concentration measuring part 72, the second concentration measuring part 74, and/or the third concentration measuring part 76 via the interface. The processor is configured to process the signals thus received. Whereby, the function of each functional unit (decision part 62, determination part 64, and/or reductant supply amount adjusting part 66) described below is realized. The processor may calculate an opening degree command value for the valve 48 on the basis of the concentration measurement by the first concentration measuring part 72, the second concentration measuring part 74, and/or the third concentration measuring part 76. The control device 60 may provide the calculated opening degree command value to an actuator for changing the opening degree of the valve 48.

The processing contents in the control device 60 is implemented as programs executed by the processor. The programs may be stored in the auxiliary storage part. When executed, these programs are loaded into the storage device. The processor reads out the programs from the storage device to execute instructions included in the programs.

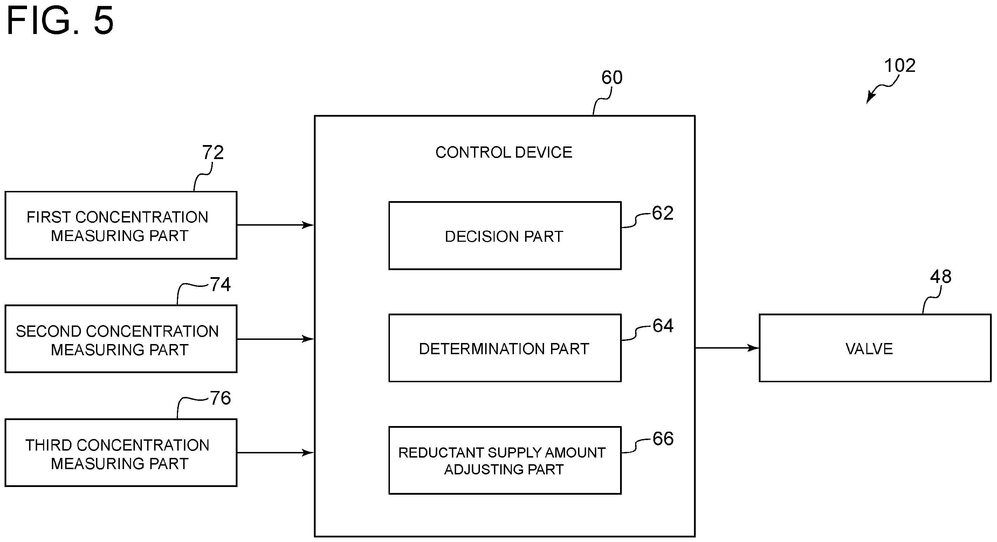

FIG. 5 is a schematic configuration diagram of the control device 60 of the exhaust gas treatment apparatus 102 according to an embodiment. As shown in FIG. 5, the control device 60 according to an embodiment includes a decision part 62. The control device 60 may also include a determination part 64 or a reductant supply amount adjusting part 66.

The decision part 62 is configured to decide whether to increase or decrease the supply amount of the reductant from the reductant supply part 40, on the basis of the first concentration and the second concentration of the specific substance (e.g., NOx).

The determination part 64 is configured to determine whether it is necessary to adjust the supply amount of the reductant from the reductant supply part 40, on the basis of the third concentration of the specific substance (e.g., NOx).

The reductant supply amount adjusting part 66 is configured to adjust the supply amount of the reductant from the reductant supply part 40 so that the third concentration of the specific substance (e.g., NOx) is within a predetermined range. The reductant supply amount adjusting part 66 may be configured to regulate the opening degree of the valve 48 in the supply line 46 for supplying the reductant in order to adjust the supply amount of the reductant from the reductant supply part 40.

According to the exhaust gas treatment apparatus 102 with the above-described configuration, since the first concentration measuring part 72 and the second concentration measuring part 74 for respectively measuring the concentrations (first concentration and second concentration) of the specific substance (substance to be reduced by the reductant; e.g., nitrogen oxides (NOx)) in the combustion exhaust gas upstream and downstream of the reductant decreasing catalyst 52, which is disposed downstream of the first reduction catalyst 50, are provided, even when the reductant is excessively supplied to the specific substance, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce the specific substance can be appropriately adjusted with a simple configuration including the first concentration measuring part 72 and the second concentration measuring part 74. Alternatively, the supply amount of the reductant to reduce the specific substance can be appropriately adjusted with a simple configuration that does not include a sensor for measuring the reductant concentration.

### (Flow of exhaust gas treatment method)

The flow of an exhaust gas treatment method according to some embodiments will now be described in more detail. In the following description, a case will be described in which combustion exhaust gas from the combustion apparatus 100 is treated by the exhaust gas treatment apparatus 102 of any of FIGs. 2 to 4. However, a part or whole of the procedure described below may be performed by another apparatus or manually. In the following example, nitrogen oxides (NOx; specific substance) are contained in the combustion exhaust gas, and ammonia, which can reduce NOx (specific substance), is used as the reductant.

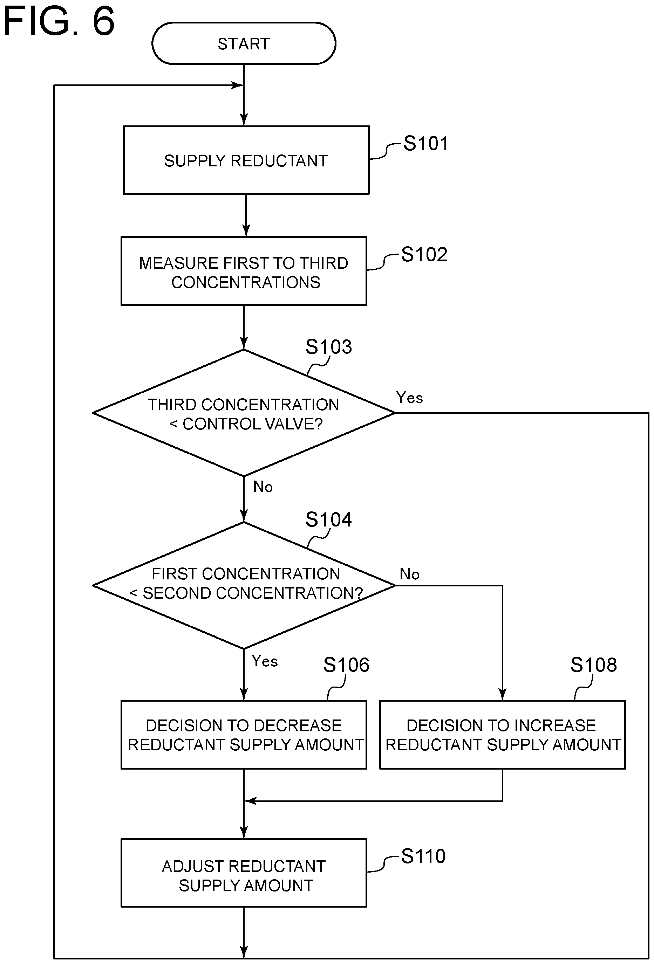

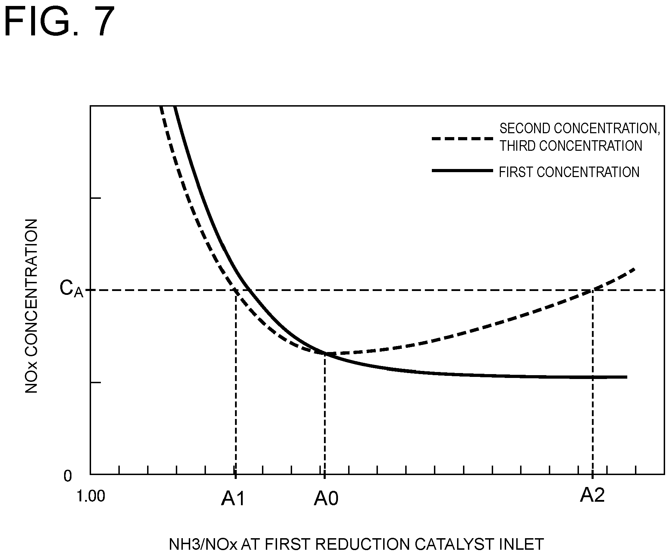

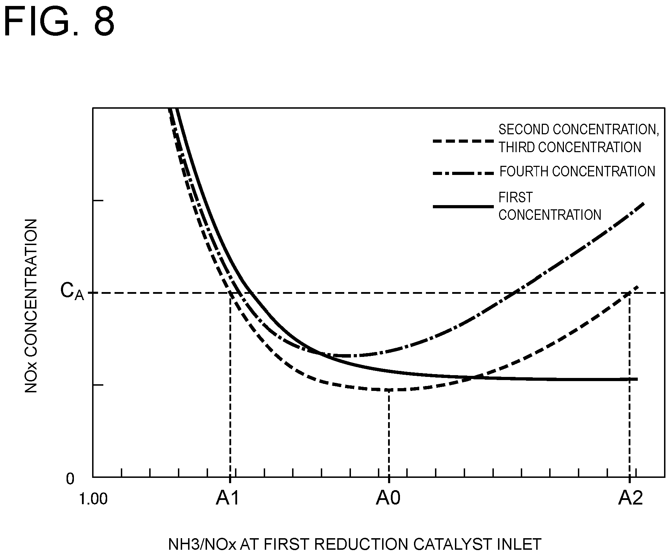

FIG. 6 is a flowchart of an exhaust gas treatment method according to an embodiment. FIGs. 7 and 8 are each a graph for describing the procedure of the exhaust gas treatment method according to an embodiment, showing an example of the relationship between the concentration ratio of ammonia (reductant) to NOx (specific substance) at the inlet of the first reduction catalyst 50 (i.e., at a position downstream of the reductant supply part 40 and upstream of the first reduction catalyst 50 in the flow path 32) (horizontal axis) and the first to third concentrations (NOx concentrations at predetermined positions) (vertical axis). FIGs. 7 and 8 correspond to the apparatus configuration of the exhaust gas treatment apparatus 102 shown in FIGs. 2 and 4, respectively.

First, the graph will be described. As shown in the graphs of FIGs. 7 and 8, as the supply amount of ammonia (reductant) from the reductant supply part 40 to NOx (specific substance) in the combustion exhaust gas increases (i.e., as the value on the horizontal axis increases), the first concentration (NOx concentration downstream of the first reduction catalyst 50 and upstream of the reductant decreasing catalyst 52) decreases. This is because the amount of NOx that reacts with ammonia increases as the amount of ammonia supplied from the reductant supply part 40 increases.

On the other hand, as the supply amount of ammonia from the reductant supply part 40 to NOx in the combustion exhaust gas increases (i.e., as the value on the horizontal axis increases), the second and third concentrations (NOx concentration downstream of the reductant decreasing catalyst 52) decrease until the concentration ratio of ammonia to NOx (NH₃/NOx) reaches A0 but increase when this ratio exceeds A0. This is because NOx is produced as byproducts when the unreacted content, which has not consumed in the reduction reaction with NOx on the first reduction catalyst 50, of the reductant supplied from the reductant supply part 40 decomposes on the reductant decreasing catalyst 52 (ammonia decomposition catalyst).

The following explanation is given according to the flowchart, also referring to the graphs of FIGs. 7 and 8. In the method of the flowchart shown in FIG. 6, first, as a precondition, the reductant supply part 40 supplies ammonia to the combustion exhaust gas flowing through the flow path 32 so that the supply amount of ammonia (reductant) to NOx (specific substance) is excessive (i.e., the concentration ratio of ammonia to NOx (NH₃/NOx) exceeds 1) (S101).

Then, the first concentration measuring part 72, the second concentration measuring part 74, and the third concentration measuring part 76 measure the NOx concentration at predetermined positions described above (S102).

Then, the determination part 64 acquires the measured value of NOx concentration by the third concentration measuring part 76 (third concentration, i.e., NOx concentration at the outlet of the exhaust gas treatment apparatus 102) and compares the third concentration with a control value C_{A} (see FIGs. 7 and 8) (S103).

If the third concentration is less than the control value C_{A} in step S103 (Yes in S103), the third concentration (NOx concentration at the outlet of the exhaust gas treatment apparatus 102) is less than the control value C_{A} and within a permissible range, so the determination part 64 determines that it is unnecessary to adjust the supply amount of ammonia from the reductant supply part 40, and the process returns to step S101.

On the other hand, if the third concentration is equal to or greater than the control value C_{A} in step S103 (No in S103), the third concentration (NOx concentration at the outlet of the exhaust gas treatment apparatus 102) is equal to or greater than the control value C_{A} and outside the permissible range, so the determination part 64 determines that it is necessary to adjust the supply amount of ammonia from the reductant supply part 40, and the process proceeds to the next step S104 to change the ammonia supply amount.

In step S104, the decision part 62 acquires the measured value of NOx concentration by the first concentration measuring part 72 (first concentration, i.e., NOx concentration upstream of the reductant decreasing catalyst 52) and the measured value of NOx concentration by the second concentration measuring part 74 (second concentration, i.e., NOx concentration downstream of the reductant decreasing catalyst 52) and compares the first concentration with the second concentration.

If the first concentration is smaller than the second concentration in step S104 (Yes in S104; i.e., the value on the horizontal axis is greater than A2 in FIGs. 7 and 8), the decision part 62 decides to decrease the supply amount of ammonia from the reductant supply part 40 (S106). This is because the fact that the first concentration is greater than the second concentration means that the amount of NOx produced by the decomposition reaction of ammonia on the reductant decreasing catalyst 52 is greater, and therefore the ammonia supply must be reduced to decrease the amount of NOx produced by the decomposition of unreacted ammonia.

On the other hand, if the first concentration is equal to or greater than the second concentration in step S104 (No in S104; i.e., the value on the horizontal axis is equal to or smaller than A1 in FIGs. 7 and 8), the decision part 62 decides to increase the supply amount of ammonia from the reductant supply part 40 (S108). This is because the fact that the first concentration is equal to or smaller than the second concentration means that NOx in the combustion exhaust gas has not been sufficiently decreased by reaction with ammonia and the ammonia supply is insufficient, thus requiring an increase in the supply amount of ammonia from the reductant supply part 40.

Once the direction of increasing or decreasing ammonia is decided by the procedure of steps S104 to S108, the reductant supply amount adjusting part 66 adjusts the supply amount of ammonia from the reductant supply part 40 so that, for example, the third concentration (NOx concentration at the outlet of the exhaust gas treatment apparatus 102) is less than the control value C_{A} (for example, by regulating the opening degree of the valve 48) (S110).

Then return to step S101 and repeat the same procedure.

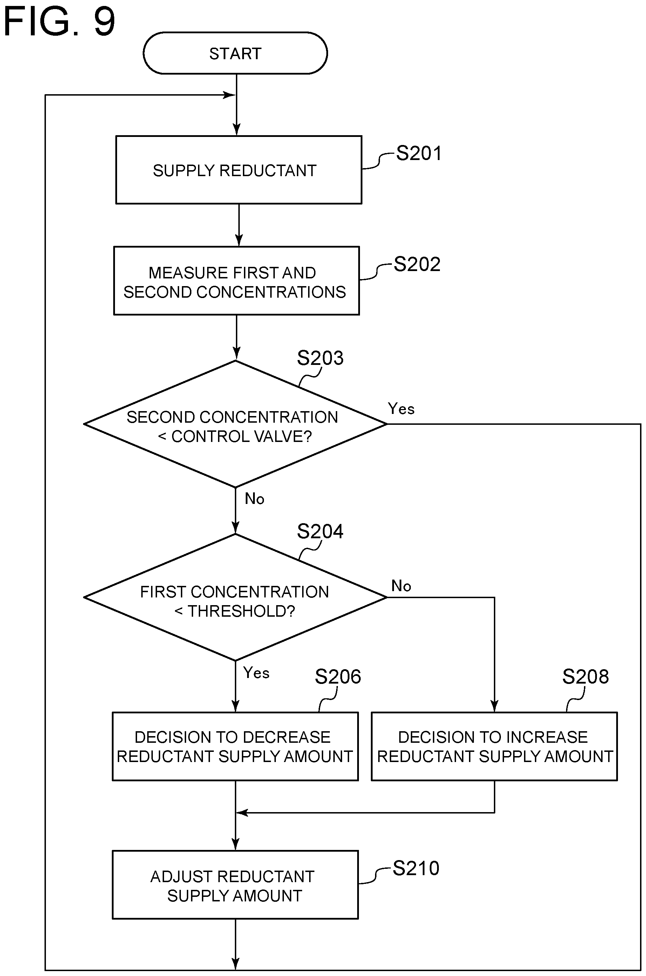

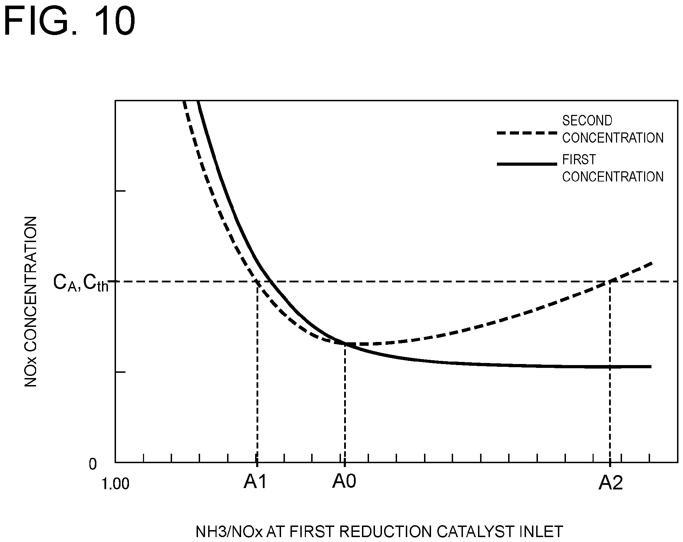

FIG. 9 is a flowchart of an exhaust gas treatment method according to another embodiment. FIG. 10 is a graph similar to FIG. 7 for describing the process of the exhaust gas treatment method according to an embodiment. FIG. 10 correspond to the apparatus configuration of the exhaust gas treatment apparatus 102 shown in FIG. 2. In this embodiment, the second concentration measuring part 74 is configured to measure the NOx concentration in the flow path 32 at a position downstream of the reductant decreasing catalyst 52 and downstream of the second reduction catalyst 54.

The following explanation is given according to the flowchart, also referring to the graph of FIG. 10. In the method of the flowchart shown in FIG. 9, first, as a precondition, the reductant supply part 40 supplies ammonia to the combustion exhaust gas flowing through the flow path 32 so that the supply amount of ammonia (reductant) to NOx (specific substance) is excessive (i.e., the concentration ratio of ammonia to NOx (NH₃/NOx) exceeds 1) (S201).

Then, the first concentration measuring part 72 and the second concentration measuring part 74 measure the NOx concentration at predetermined positions described above (S202).

Then, the determination part 64 acquires the measured value of NOx concentration by the second concentration measuring part 74 (second concentration, i.e., NOx concentration at the outlet of the exhaust gas treatment apparatus 102) and compares the second concentration with a control value C_{A} (see FIG. 10) (S203).

If the second concentration is less than the control value C_{A} in step S203 (Yes in S203), the second concentration (NOx concentration at the outlet of the exhaust gas treatment apparatus 102) is less than the control value C_{A} and within a permissible range, so the determination part 64 determines that it is unnecessary to adjust the supply amount of ammonia from the reductant supply part 40, and the process returns to step S201.

On the other hand, if the second concentration is equal to or greater than the control value C_{A} in step S203 (No in S203), the second concentration (NOx concentration at the outlet of the exhaust gas treatment apparatus 102) is equal to or greater than the control value C_{A} and outside the permissible range, so the determination part 64 determines that it is necessary to adjust the supply amount of ammonia from the reductant supply part 40, and the process proceeds to the next step S204 to change the ammonia supply amount.

In step S204, the decision part 62 acquires the measured value of NOx concentration by the first concentration measuring part 72 (first concentration, i.e., NOx concentration upstream of the reductant decreasing catalyst 52) and compares the first concentration with a preset threshold Cₜₕ (see FIG. 10). The threshold Cₜₕ may be the same value as the control value C_{A} as shown in FIG. 10, or it may be different from the control value C_{A}.

If the first concentration is smaller than the threshold Cₜₕ in step S204 (Yes in S204; i.e., the value on the horizontal axis is greater than A2 in FIG. 10), the decision part 62 decides to decrease the supply amount of ammonia from the reductant supply part 40 (S206). This is because the fact that the first concentration is greater than the threshold means that the amount of NOx produced by the decomposition reaction of ammonia on the reductant decreasing catalyst 52 is greater, and therefore the ammonia supply must be reduced to decrease the amount of NOx produced by the decomposition of unreacted ammonia.

On the other hand, if the first concentration is equal to or greater than the threshold Cₜₕ in step S204 (No in S204; i.e., the value on the horizontal axis is equal to or smaller than A1 in FIG. 10), the decision part 62 decides to increase the supply amount of ammonia from the reductant supply part 40 (S208). This is because the fact that the first concentration is equal to or smaller than the second concentration means that NOx in the combustion exhaust gas has not been sufficiently decreased by reaction with ammonia and the ammonia supply is insufficient, thus requiring an increase in the supply amount of ammonia from the reductant supply part 40.

Once the direction of increasing or decreasing ammonia is decided by the procedure of steps S204 to S208, the reductant supply amount adjusting part 66 adjusts the supply amount of ammonia from the reductant supply part 40 so that, for example, the second concentration (NOx concentration at the outlet of the exhaust gas treatment apparatus 102) is less than the control value C_{A} (for example, by regulating the opening degree of the valve 48) (S210).

Then return to step S201 and repeat the same procedure.

According to the exhaust gas treatment method (e.g., the method shown in each flowchart of FIGs. 6 and 9), since the concentrations (first concentration and second concentration) of NOx (specific substance) in the combustion exhaust gas upstream and downstream of the reductant decreasing catalyst 52, which is disposed downstream of the first reduction catalyst 50, are measured, even when ammonia (reductant) is excessively supplied to NOx to efficiently reduce NOx, it is possible to appropriately decide the direction of increase or decrease of the supply amount of ammonia (i.e., whether to increase or decrease the supply amount of ammonia) on the basis of measurement results of the first and second concentrations. Therefore, the amount supply of ammonia for reducing NOx can be appropriately adjusted with a simple configuration including the first concentration measuring part 72 and the second concentration measuring part 74. Alternatively, the supply amount of ammonia for reducing NOx can be appropriately adjusted with a simple configuration that does not include a sensor for measuring the reductant concentration.

The contents described in the above embodiments would be understood as follows, for instance.
(1) An exhaust gas treatment apparatus (102) according to at least one embodiment of the present invention includes: a first reduction catalyst (50), disposed in a flow path (32) of combustion exhaust gas of a fuel, for promoting reduction reaction of a specific substance (e.g., NOx) contained in the combustion exhaust gas; a reductant supply part (40) for supplying a reductant (e.g., ammonia) for reducing the specific substance in the combustion exhaust gas, the reductant supply part being disposed upstream of the first reduction catalyst; a reductant decreasing catalyst (52) for decreasing the reductant in the combustion exhaust gas, the reductant decreasing catalyst being disposed downstream of the first reduction catalyst in the flow path; at least one second reduction catalyst (54) for promoting reduction reaction of the specific substance, the at least one second reduction catalyst being disposed downstream of the reductant decreasing catalyst in the flow path; a first concentration measuring part (72) for measuring a first concentration which is a concentration of the specific substance in the combustion exhaust gas in the flow path at a position downstream of the first reduction catalyst and upstream of the reductant decreasing catalyst; a second concentration measuring part (76) for measuring a second concentration which is a concentration of the specific substance in the combustion exhaust gas in the flow path at a position downstream of the reductant decreasing catalyst; and a decision part (62) configured to decide whether to increase or decrease a supply amount of the reductant from the reductant supply part, on the basis of the first concentration and the second concentration of the specific substance.
   With the above configuration (1), since the first concentration measuring part and the second concentration measuring part for respectively measuring the concentrations (first concentration and second concentration) of the specific substance (substance to be reduced by the reductant; e.g., nitrogen oxides (NOx)) in the combustion exhaust gas upstream and downstream of the reductant decreasing catalyst, which is disposed downstream of the first reduction catalyst, are provided, even when the reductant is excessively supplied to the specific substance, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce the specific substance can be appropriately adjusted with a simple configuration including the first concentration measuring part and the second concentration measuring part.
(2) In some embodiments, in the above configuration (1), the exhaust gas treatment apparatus includes: a third concentration measuring part (76) for measuring a third concentration which is a concentration of the specific substance in the combustion exhaust gas in the flow path at a position downstream of the at least one second reduction catalyst; and a determination part (64) configured to determine whether it is necessary to adjust the supply amount of the reductant from the reductant supply part, on the basis of the third concentration.
   With the above configuration (2), the third concentration of the specific substance in the combustion exhaust gas at a position downstream of the second reduction catalyst, which is disposed downstream of the reductant decreasing catalyst, (i.e., the concentration of the specific substance at the outlet of the exhaust gas treatment apparatus) is measured, and the necessity of adjusting the supply amount of the reductant is determined on the basis of the third concentration. Therefore, it is possible to decide whether to increase or decrease the supply amount of the reductant on the basis of the configuration (1), after determining the necessity of adjusting the supply amount of the reductant on the basis of the third concentration.
(3) In some embodiments, in the above configuration (2), the third concentration measuring part is disposed downstream of a most downstream second reduction catalyst of the at least one second reduction catalyst in the flow path.
   With the above configuration (3), since the third concentration of the specific substance in the combustion exhaust gas at a position downstream of the most downstream second reduction catalyst of the at least one second reduction catalyst, (i.e., the concentration of the specific substance at the outlet of the exhaust gas treatment apparatus) is measured, it is possible to appropriately determine whether it is necessary to adjust the supply amount of the reductant on the basis of the third concentration.
(4) In some embodiments, in the above configuration (2) or (3), the exhaust gas treatment apparatus includes a reductant supply amount adjusting part (66) configured to adjust the supply amount of the reductant from the reductant supply part so that the third concentration is within a predetermined range.
   With the above configuration (4), when the determination part determines that it is necessary to adjust the supply amount of the reductant from the reductant supply part, the reductant supply amount is adjusted so that the third concentration in the combustion exhaust gas is within the predetermined range (e.g., below a regulation value or control value). This allows the concentration of the specific substance in the combustion exhaust gas discharged from the exhaust gas treatment apparatus to be within an appropriate range.
(5) In some embodiments, in any one of the above configurations (2) to (4), the second concentration measuring part is disposed downstream of the at least one second reduction catalyst in the flow path.
   With the above configuration (5), the second concentration measuring part is disposed downstream of the second reduction catalyst, as with the third concentration measuring part. Therefore, a measuring tool (e.g., concentration sensor) for measuring the concentration of the specific substance can be used as both the second concentration measuring part and the third concentration measuring part. Therefore, the supply amount of the reductant can be appropriately adjusted with a simpler configuration.
(6) In some embodiments, in any one of the above configurations (1) to (5), the decision part is configured to decide whether to increase or decrease the supply amount of the reductant, on the basis a comparison between the first concentration and the second concentration.
   With the above configuration (6), it is possible to appropriately decide whether to increase or decrease the supply amount of the reductant, on the basis a comparison between the first concentration and the second concentration of the specific substance in the combustion exhaust gas. Therefore, the supply amount of the reductant to reduce the specific substance can be appropriately adjusted with a simple configuration including the first concentration measuring part and the second concentration measuring part.
(7) In some embodiments, in the above configuration (6), the decision part is configured to decide to decrease the supply amount of the reductant when the first concentration is smaller than the second concentration.
   With the above configuration (7), when the first concentration of the specific substance in the combustion exhaust gas is smaller than the second concentration, it is decided to decrease the supply amount of the reductant. Thus, it is possible to appropriately adjust the supply amount of the reductant, on the basis a comparison between the first concentration and the second concentration.

In some embodiments, in the above configuration (6) or (7), the decision part is configured to decide to increase the supply amount of the reductant when the first concentration is equal to or greater than the second concentration.

With the above configuration (8), when the first concentration of the specific substance in the combustion exhaust gas is equal to or greater than the second concentration, it is decided to increase the supply amount of the reductant. Thus, it is possible to appropriately adjust the supply amount of the reductant, on the basis a comparison between the first concentration and the second concentration.

(9) In some embodiments, in the above configuration (1), the second concentration measuring part is disposed downstream of the at least one second reduction catalyst in the flow path. The exhaust gas treatment apparatus includes a determination part (64) configured to determine whether it is necessary to adjust the supply amount of the reductant from the reductant supply part, on the basis of the second concentration. The decision part is configured to, when the determination part determines that it is necessary to adjust the supply amount of the reductant, decide whether to increase or decrease the supply amount of the reductant from the reductant supply part, on the basis a comparison between the first concentration and a threshold.

With the above configuration (9), the necessity of adjusting the supply amount of the reductant is determined on the basis of the second concentration, and when it is necessary to adjust the supply amount of the reductant, it is possible to appropriately decide whether to increase or decrease the supply amount of the reductant on the basis of a comparison between the first concentration and the threshold. Therefore, the supply amount of the reductant to reduce the specific substance can be appropriately adjusted with a simple configuration including the first concentration measuring part and the second concentration measuring part.

(10) In some embodiments, in any one of the above configurations (1) to (9), the specific substance includes a nitrogen oxide.

With the above configuration (10), since the first concentration measuring part and the second concentration measuring part for respectively measuring the concentrations (first concentration and second concentration) of nitrogen oxides (NOx) in the combustion exhaust gas upstream and downstream of the reductant decreasing catalyst, which is disposed downstream of the first reduction catalyst, are provided, even when the reductant is excessively supplied to nitrogen oxides, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce nitrogen oxides can be appropriately adjusted with a simple configuration including the first concentration measuring part and the second concentration measuring part.

(11) In some embodiments, in the above configuration (10), the reductant includes ammonia or urea.

With the above configuration (11), since the first concentration measuring part and the second concentration measuring part for respectively measuring the concentrations (first concentration and second concentration) of nitrogen oxides (NOx) in the combustion exhaust gas upstream and downstream of the reductant decreasing catalyst, which is disposed downstream of the first reduction catalyst, are provided, even when ammonia or urea as the reductant is excessively supplied to nitrogen oxides, it is possible to appropriately decide the direction of increase or decrease of the supply amount of ammonia or urea (reductant) (i.e., whether to increase or decrease the supply amount of the reductant) on the basis of measurement results of the first and second concentrations. Therefore, the supply amount of ammonia or urea (reductant) to reduce nitrogen oxides can be appropriately adjusted with a simple configuration including the first concentration measuring part and the second concentration measuring part.

(12) A combustion facility (1) according to at least one embodiment of the present invention includes: a combustion apparatus (100) configured to burn a fuel; and the exhaust gas treatment apparatus (102) described in any one of the above (1) to (11) configured to treat combustion exhaust gas of the fuel from the combustion apparatus.

With the above configuration (12), since the first concentration measuring part and the second concentration measuring part for respectively measuring the concentrations (first concentration and second concentration) of the specific substance (substance to be reduced by the reductant; e.g., nitrogen oxides (NOx)) in the combustion exhaust gas upstream and downstream of the reductant decreasing catalyst, which is disposed downstream of the first reduction catalyst, are provided, even when the reductant is excessively supplied to the specific substance, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce the specific substance can be appropriately adjusted with a simple configuration including the first concentration measuring part and the second concentration measuring part.

(13) A power generation facility according to at least one embodiment of the present invention includes: the combustion facility (1) described in (12); a turbine (14 or 20) configured to be driven by the combustion exhaust gas from the combustion apparatus or steam produced by using heat of the combustion exhaust gas from the combustion apparatus; and a generator (18 or 24) configured to be driven by the turbine.

With the above configuration (13), since the first concentration measuring part and the second concentration measuring part for respectively measuring the concentrations (first concentration and second concentration) of the specific substance (substance to be reduced by the reductant; e.g., nitrogen oxides (NOx)) in the combustion exhaust gas upstream and downstream of the reductant decreasing catalyst, which is disposed downstream of the first reduction catalyst, are provided, even when the reductant is excessively supplied to the specific substance, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce the specific substance can be appropriately adjusted with a simple configuration including the first concentration measuring part and the second concentration measuring part.

(14) An exhaust gas treatment method according to at least one embodiment of the present invention is an exhaust gas treatment method using an exhaust gas treatment apparatus (102) that includes: a first reduction catalyst (50), disposed in a flow path (32) of combustion exhaust gas of a fuel, for promoting reduction reaction of a specific substance contained in the combustion exhaust gas; a reductant supply part (40) for supplying a reductant for reducing the specific substance in the combustion exhaust gas, the reductant supply part being disposed upstream of the first reduction catalyst; a reductant decreasing catalyst (52) for decreasing the reductant in the combustion exhaust gas, the reductant decreasing catalyst being disposed downstream of the first reduction catalyst in the flow path; and at least one second reduction catalyst (54) for promoting reduction reaction of the specific substance, the at least one second reduction catalyst being disposed downstream of the reductant decreasing catalyst in the flow path. The exhaust gas treatment method includes: a step of measuring a first concentration which is a concentration of the specific substance in the combustion exhaust gas in the flow path at a position downstream of the first reduction catalyst and upstream of the reductant decreasing catalyst; a step of measuring a second concentration which is a concentration of the specific substance in the combustion exhaust gas in the flow path at a position downstream of the reductant decreasing catalyst; and a step of deciding whether to increase or decrease a supply amount of the reductant from the reductant supply part, on the basis of the first concentration and the second concentration of the specific substance.

With the above method (14), since the concentrations (first concentration and second concentration) of the specific substance (substance to be reduced by the reductant; e.g., nitrogen oxides (NOx)) in the combustion exhaust gas upstream and downstream of the reductant decreasing catalyst, which is disposed downstream of the first reduction catalyst, are measured, even when the reductant is excessively supplied to the specific substance, it is possible to appropriately decide the direction of increase or decrease of the supply amount of the reductant (i.e., whether to increase or decrease the supply amount of the reductant) on the basis of measurement results of the first and second concentrations. Therefore, the supply amount of the reductant to reduce the specific substance can be appropriately adjusted with a simple configuration capable of measuring the first concentration and the second concentration.

Embodiments of the present invention were described in detail above, but the present invention is not limited thereto, and various amendments and modifications may be implemented.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", and "have" are not intended to be exclusive of other components.

### Reference Signs List

- 1: Combustion facility Gas turbine facility
- 2 4: Steam turbine facility
- 6: Heat recovery steam generator
- 10: Compressor
- 12: Combustor
- 14: Turbine
- 16: Rotational shaft
- 18: Generator
- 20: Turbine
- 22: Rotational shaft
- 24: Generator
- 26: Condenser
- 30: Duct
- 32: Flow path
- 34: Heat transfer tube
- 38: Stack
- 40: Reductant supply part
- 42: Nozzle
- 44: Reductant storage part
- 46: Supply line
- 48: Valve
- 50: First reduction catalyst
- 52, 52A to 52C: Reductant decreasing catalyst
- 54, 54A to 54C: Second reduction catalyst
- 60: Control device
- 62: Decision part
- 64: Determination part
- 66: Reductant supply amount adjusting part
- 72: First concentration measuring part
- 74: Second concentration measuring part
- 76: Third concentration measuring part
- 82: Fourth concentration measuring part
- 100: Combustion apparatus
- 102: Exhaust gas treatment apparatus

## Claims

1. An exhaust gas treatment apparatus, comprising:
a first reduction catalyst, disposed in a flow path of combustion exhaust gas of a fuel, for promoting reduction reaction of a specific substance contained in the combustion exhaust gas;
a reductant supply part for supplying a reductant for reducing the specific substance in the combustion exhaust gas, the reductant supply part being disposed upstream of the first reduction catalyst;
a reductant decreasing catalyst for decreasing the reductant in the combustion exhaust gas, the reductant decreasing catalyst being disposed downstream of the first reduction catalyst in the flow path;
at least one second reduction catalyst for promoting reduction reaction of the specific substance, the at least one second reduction catalyst being disposed downstream of the reductant decreasing catalyst in the flow path;
a first concentration measuring part for measuring a first concentration which is a concentration of the specific substance in the combustion exhaust gas in the flow path at a position downstream of the first reduction catalyst and upstream of the reductant decreasing catalyst;
a second concentration measuring part for measuring a second concentration which is a concentration of the specific substance in the combustion exhaust gas in the flow path at a position downstream of the reductant decreasing catalyst; and
a decision part configured to decide whether to increase or decrease a supply amount of the reductant from the reductant supply part, on the basis of the first concentration and the second concentration of the specific substance.

2. The exhaust gas treatment apparatus according to claim 1, comprising:
a third concentration measuring part for measuring a third concentration which is a concentration of the specific substance in the combustion exhaust gas in the flow path at a position downstream of the at least one second reduction catalyst; and
a determination part configured to determine whether it is necessary to adjust the supply amount of the reductant from the reductant supply part, on the basis of the third concentration.

3. The exhaust gas treatment apparatus according to claim 2,
wherein the third concentration measuring part is disposed downstream of a most downstream second reduction catalyst of the at least one second reduction catalyst in the flow path.

4. The exhaust gas treatment apparatus according to claim 2 or 3, comprising a reductant supply amount adjusting part configured to adjust the supply amount of the reductant from the reductant supply part so that the third concentration is within a predetermined range.

5. The exhaust gas treatment apparatus according to claim 2 or 3,
wherein the second concentration measuring part is disposed downstream of the at least one second reduction catalyst in the flow path.

6. The exhaust gas treatment apparatus according to any one of claims 1 to 3,
wherein the decision part is configured to decide whether to increase or decrease the supply amount of the reductant, on the basis a comparison between the first concentration and the second concentration.

7. The exhaust gas treatment apparatus according to claim 6,
wherein the decision part is configured to decide to decrease the supply amount of the reductant when the first concentration is smaller than the second concentration.

8. The exhaust gas treatment apparatus according to claim 6,
wherein the decision part is configured to decide to increase the supply amount of the reductant when the first concentration is equal to or greater than the second concentration.

9. The exhaust gas treatment apparatus according to claim 1,
wherein the second concentration measuring part is disposed downstream of the at least one second reduction catalyst in the flow path,
wherein the exhaust gas treatment apparatus comprises a determination part configured to determine whether it is necessary to adjust the supply amount of the reductant from the reductant supply part, on the basis of the second concentration, and
wherein the decision part is configured to, when the determination part determines that it is necessary to adjust the supply amount of the reductant, decide whether to increase or decrease the supply amount of the reductant from the reductant supply part, on the basis a comparison between the first concentration and a threshold.

10. The exhaust gas treatment apparatus according to any one of claims 1 to 3,
wherein the specific substance includes a nitrogen oxide.

11. The exhaust gas treatment apparatus according to claim 10,
wherein the reductant includes ammonia or urea.

12. A combustion facility, comprising:
a combustion apparatus configured to burn a fuel; and
an exhaust gas treatment apparatus according to any one of claims 1 to 3 configured to treat combustion exhaust gas of the fuel from the combustion apparatus.

13. A power generation facility, comprising:
a combustion facility according to claim 12;
a turbine configured to be driven by the combustion exhaust gas from the combustion apparatus or steam produced by using heat of the combustion exhaust gas from the combustion apparatus; and
a generator configured to be driven by the turbine.

14. An exhaust gas treatment method using an exhaust gas treatment apparatus that includes:
a first reduction catalyst, disposed in a flow path of combustion exhaust gas of a fuel, for promoting reduction reaction of a specific substance contained in the combustion exhaust gas;
a reductant supply part for supplying a reductant for reducing the specific substance in the combustion exhaust gas, the reductant supply part being disposed upstream of the first reduction catalyst;
a reductant decreasing catalyst for decreasing the reductant in the combustion exhaust gas, the reductant decreasing catalyst being disposed downstream of the first reduction catalyst in the flow path; and
at least one second reduction catalyst for promoting reduction reaction of the specific substance, the at least one second reduction catalyst being disposed downstream of the reductant decreasing catalyst in the flow path,
the exhaust gas treatment method comprising:
a step of measuring a first concentration which is a concentration of the specific substance in the combustion exhaust gas in the flow path at a position downstream of the first reduction catalyst and upstream of the reductant decreasing catalyst;
a step of measuring a second concentration which is a concentration of the specific substance in the combustion exhaust gas in the flow path at a position downstream of the reductant decreasing catalyst; and
a step of deciding whether to increase or decrease a supply amount of the reductant from the reductant supply part, on the basis of the first concentration and the second concentration of the specific substance.
